# EUROPEAN PATENT APPLICATION

(11) **EP 3 392 282 A1**
(43) Date of publication of application: **24.10.2018**
(21) Application number: 16875577.5
(22) Date of filing: 12.12.2016
(51) Int. Cl.: C08G 18/48, A47C 27/14, C08G 18/00, C08G 18/76, C08G 101/00, C08G 18/63, C08G 18/66, C08G 18/32, C08G 18/40

(54) **SOFT POLYURETHANE FOAM AND SEAT PAD**

(30) Priority: 16.12.2015 JP 2015245707
(71) Applicant: Bridgestone Corporation, Tokyo 104-8340 (JP)
(72) Inventor: YOSHITOMI Kosuke, Tokyo 104-8340 (JP); SEGUCHI Hideharu, Tokyo 104-8340 (JP)
(74) Representative: Oxley, Robin John George
(86) International application number: PCT/JP2016/086871
(87) International publication number: WO 2017/104600

(57) **Abstract**

The present invention provides a soft polyurethane foam obtained by foam molding a foaming stock solution containing a polyol, a polyisocyanate, a foaming agent, and a catalyst. The polyol includes a polyether polyol A having a weight average molecular weight (Mw) of 3,000 to 8,000 and 3 to 4 functional groups and a polyether polyol B having a weight average molecular weight (Mw) of 1,000 to 4,000 and 2 functional groups. The polyisocyanate includes diphenylmethane diisocyanate.

## Description

### [Technical Field]

The present invention relates to a soft polyurethane foam used for various molded products such as automobile components and indoor household products, and a seat pad (seat cushioning material) using the soft polyurethane foam.

Priority is claimed on Japanese Patent Application No. 2015-245707, filed December 16, 2015, the content of which is incorporated herein by reference.

### [Background Art]

Soft polyurethane foams are used for various applications such as a seat pad of a vehicle such as an automobile, a cushioning material for indoor chairs, bedding, and the like, and a buffering material for the flooring of houses. Various mechanical properties are required according to applications, and pleasant seating comfort is required for an automobile seat pad.

The applicant proposed a polyurethane foam of Patent Document 1 as a polyurethane foam that has an appropriate resilience, is lightweight, and has good vibration absorption characteristics. The polyurethane foam is a polyurethane foam obtained by foam molding a polyurethane foaming stock solution containing a polyol and an isocyanate, and in which a polyether polyol whose molecular weight, degree of unsaturation, and molecular weight/number of functional groups are regulated such that they are within specific ranges is used as a main component, and an organically-treated inorganic filler is additionally added.

### [Citation List]

### [Patent Document]

### [Patent Document 1]

Japanese Unexamined Patent Application, First Publication No. 2008-127514

### [Summary of Invention]

### [Technical Problem]

An object of the present invention is to provide a seat pad having good mechanical properties which reduces a feeling of shakiness during seating, and a soft polyurethane foam for forming the seat pad.

### [Solution to Problem]

[1] A soft polyurethane foam obtained by foam molding a foaming stock solution containing a polyol, a polyisocyanate, a foaming agent, and a catalyst, wherein the polyol includes a polyether polyol A having a weight average molecular weight (Mw) of 3,000 to 8,000 and 3 to 4 functional groups and a polyether polyol B having a weight average molecular weight (Mw) of 1,000 to 4,000 and 2 functional groups, and the polyisocyanate includes diphenylmethane diisocyanate.
[2] The soft polyurethane foam according to [1], wherein the polyol includes a polyol C having a hydroxyl value of 200 mg KOH/g or more, having an alkyleneoxy group having 2 to 4 carbon atoms, and having a mass ratio between [ethyleneoxy groups]:[alkyleneoxy groups having 3 or 4 carbon atoms] of 100:0 to 60:40.
[3] The soft polyurethane foam according to [1] or [2], wherein a stiffness distribution in a thickness direction of the soft polyurethane foam shows a continuously increasing trend or decreasing trend.
[4] A seat pad comprising the soft polyurethane foam according to any one of [1] to [3].

### [Effects of Invention]

The seat pad formed of the soft polyurethane foam of the present invention has good mechanical properties and less of a feeling of shakiness during seating.

### [Description of Embodiments]

Exemplary embodiments of the present invention will be described below, but the present invention is not limited to the embodiments.

A soft polyurethane foam of the present invention is a soft polyurethane foam obtained by foam molding a foaming stock solution containing a polyol, a polyisocyanate, a foaming agent, and a catalyst, and satisfies the following (i) to (iii).
(i) The polyol includes a polyether polyol A having a weight average molecular weight (Mw) of 3,000 to 8,000 and 3 to 4 functional groups.
(ii) The polyol includes a polyether polyol B having a weight average molecular weight (Mw) of 1,000 to 4,000 and 2 functional groups.
(iii) The polyisocyanate includes diphenylmethane diisocyanate (MDI).

In addition, the soft polyurethane foam of the present invention preferably satisfies the following (iv).
(iv) The polyol preferably includes a polyol C having a hydroxyl value of 200 mg KOH/g or more, having an alkyleneoxy group having 2 to 4 carbon atoms, and having a mass ratio between [ethyleneoxy groups]:[alkyleneoxy groups having 3 or 4 carbon atoms] of 100:0 to 60:40.

### <Polyol>

### (Polyether polyol A)

The polyether polyol A contained in the foaming stock solution is a polyether polyol having a weight average molecular weight (Mw) of 3,000 to 8,000 and 3 to 4 functional groups (hydroxy groups). As the polyether polyol A, a polyether polyol obtained by ring-opening polymerization of an alkylene oxide is preferable because it has favorable reactivity.

Examples of the alkylene oxide include propylene oxide (PO) and ethylene oxide (EO). The alkylene oxides used as a material of the polyether polyol A may be of one or more types.

A mixing ratio (mass ratio) between PO and EO contained in the polyether polyol A contained in the foaming stock solution is not particularly limited, and for example, an EO/PO (mass ratio) of 0/100 to 25/75 is preferable, and 0/100 to 20/80 is more preferable. When EO/PO (mass ratio) is within the above range, it is possible to easily form a soft polyurethane foam having good mechanical properties.

The number of hydroxy groups (functional groups) included in one molecule of the polyether polyol A contained in the foaming stock solution is 3 to 4. Within such a range, the viscosity of the foaming stock solution becomes appropriate and it is possible to obtain a soft polyurethane foam having good physical properties.

The weight average molecular weight (Mw) of the polyether polyol A contained in the foaming stock solution is preferably 4,000 to 7,500, more preferably 4,500 to 7,000, and most preferably 5,000 to 6,500. When the weight average molecular weight of the polyether polyol A is 8,000 or less, the viscosity of the foaming stock solution becomes appropriate and the stirring efficiency becomes favorable. On the other hand, when the weight average molecular weight of the polyether polyol A is 3,000 or more, it is possible to obtain a polyurethane foam having an appropriate hardness.

Here, the weight average molecular weight (Mw) is a value calculated as a polystyrene equivalent value by gel permeation chromatography (GPC method).

The degree of unsaturation of the polyether polyol A contained in the foaming stock solution is preferably 0.03 milliequivalents/gram or less. When the degree of unsaturation is 0.03 milliequivalents/gram or less, it is possible to obtain a soft polyurethane foam having favorable physical properties such as durability. Here, the "degree of unsaturation" refers to the total degree of unsaturation (milliequivalents/gram) that is measured by a method in which mercury(II) acetate acts on unsaturated bonds of a sample, and released acetic acid is titrated with potassium hydroxide according to Japanese Industrial Standards JIS K 1557-1970.

The polyether polyol A contained in the foaming stock solution may be of one or more types.

In order to easily impart desired physical properties to the soft polyurethane foam obtained by foam molding the foaming stock solution, a total content of one or more types of polyether polyol corresponding to the polyether polyol A with respect to the total mass of the polyol contained in the foaming stock solution is preferably 60 mass% or more, more preferably 65 to 90 mass%, and most preferably 65 mass% to 85 mass%.

### (Polyether polyol B)

The polyether polyol B contained in the foaming stock solution is a polyether polyol having a weight average molecular weight (Mw) of 1,000 to 4,000 and 2 functional groups (hydroxy groups). As the polyether polyol B, a polyether polyol obtained by ring-opening polymerization of an alkylene oxide is preferable because it has favorable reactivity.

Examples of the alkylene oxide include propylene oxide (PO) and ethylene oxide (EO). The alkylene oxides used as a material of the polyether polyol B may be of one or more types.

The weight average molecular weight (Mw) of the polyether polyol B contained in the foaming stock solution is preferably 1,500 to 4,000 and more preferably 2,000 to 4,000. When the weight average molecular weight of the polyether polyol B is 4,000 or less, the viscosity of the foaming stock solution becomes appropriate. On the other hand, when the weight average molecular weight of the polyether polyol B is 1,000 or more, mechanical properties of the soft polyurethane foam become more favorable.

Here, the weight average molecular weight (Mw) is a value calculated as a polystyrene equivalent value by gel permeation chromatography (GPC method).

The polyether polyol B contained in the foaming stock solution may be of one or more types.

In order to easily impart desired physical properties to the soft polyurethane foam obtained by foam molding the foaming stock solution, a total content of the one or more types of polyether polyol corresponding to the polyether polyol B with respect to the total mass of the polyol contained in the foaming stock solution is preferably 1 mass% or more, more preferably 10 mass% to 40 mass%, and most preferably 10 mass% to 30 mass%.

For an optional polyol that can be contained in the foaming stock solution, a polymer polyol A' that is a component different from the polyether polyols A and B may also be used. Here, "polymer polyol" generally refers to a polymer composition or a mixture obtained by polymerizing an ethylenically unsaturated compound in a polyether polyol. As such a polymer polyol A', a polymer polyol that is widely used for a polyurethane foam molded product can be used. For example, a polymer polyol obtained by graft copolymerization of a polymer component such as polyacrylonitrile or an acrylonitrile-styrene copolymer (AN/ST copolymer) in a polyether polyol which includes a polyalkylene oxide and has a weight average molecular weight (Mw) of 3000 to 8000, and more preferably, 4000 to 7000, may be used. As the alkylene oxides used as a material of the polyalkylene oxide, an alkylene oxide including propylene oxide (PO) as a functional group (polymerizable group) is preferable, and an alkylene oxide including only propylene oxide or an alkylene oxide including both propylene oxide and ethylene oxide (EO) are more preferable. In addition, a content of the polymer component with respect to the total mass of the polymer polyol A' is preferably 10 to 50 mass%.

Here, the polymer polyol A' is a polyol as an optional component that does not correspond to the polyether polyols A and B.

When the polyether polyols A and B and the polymer polyol A' are used together as the polyol contained in the foaming stock solution, a mass ratio between [polyether polyols A and B]/[polymer polyol A'] is preferably 70/30 to 99/1, more preferably 80/20 to 99/1, and most preferably 85/15 to 99/1. Within the above range, it is possible to easily obtain a soft polyurethane foam having desired physical properties.

### (Polyol C)

As the polyol C, a polyol functioning as a crosslinking agent is preferable. A mass ratio between [EO groups] and [alkyleneoxy groups having 3 or 4 carbon atoms] (C3, 4 groups) included in all of one or more types of polyol C contained as a crosslinking agent in the foaming stock solution is preferably EO groups:(C3, 4 groups) = 40:60 to 0:100, more preferably 15:85 to 0:100, still more preferably 10:90 to 0:100, and most preferably 5:95 to 0:100. Within such a range of the mass ratio, the elongation and mechanical strength of the soft polyurethane foam become appropriately higher.

On the other hand, in order to increase the softness of the soft polyurethane foam near the bearing surface, maintain favorable mechanical properties, and further improve pleasant seating comfort, a mass ratio between [EO groups] and [alkyleneoxy groups having 3 or 4 carbon atoms](C3, 4 groups) included in one or more types of polyol C contained as a crosslinking agent in the foaming stock solution is preferably EO groups:(C3, 4 groups) = 100:0 to 60:40, more preferably 100:0 to 85:15, still more preferably 100:0 to 90:10, and most preferably 100:0 to 95:5. Within such a range of the mass ratio, the elongation and mechanical strength of the soft polyurethane foam become appropriately higher, a feeling of shakiness decreases, the softness near the bearing surface increases, and thus pleasant seating comfort is obtained.

Here, the ethyleneoxy group (EO group) refers to a group having a monovalent bond in which one hydrogen atom included in ethylene oxide is removed. An alkyleneoxy group having 3 or 4 carbon atoms (C3, 4 groups) refers to a group having a monovalent bond in which one hydrogen atom included in propylene oxide or butylene oxide is removed.

Here, the number of carbon atoms of the alkyleneoxy group included in the polyol C may be at least one among 2 to 4.

A hydroxyl value (unit: mg KOH/g) of the polyol C is 200 or more, preferably 240 to 600, and more preferably 400 to 600.

When a hydroxyl value of the polyol C is 200 or more, the mechanical strength of the soft polyurethane foam becomes appropriately higher. When a hydroxyl value of the polyol C is 600 or less, the elongation of the soft polyurethane foam becomes appropriately higher. Thus, within the above appropriate range, it is possible to obtain a seat pad having less of a feeling of shakiness and having pleasant seating comfort.

Here, a hydroxyl value of the crosslinking agent is calculated by the formula (hydroxyl value = 56100 ÷ weight average molecular weight × number of functional groups).

As a specific polyol C, a known crosslinking agent used in the field of polyurethane foams can be used.

The polyol C contained in the foaming stock solution may be of one or more types.

In order to easily impart desired physical properties to the soft polyurethane foam obtained by foam molding the foaming stock solution, a total content of the polyol C with respect to the total mass of the polyol contained in the foaming stock solution is preferably 0.5 mass% to 15 mass%, more preferably 1 mass% to 10 mass%, and most preferably 1 mass% to 5 mass%. When the content is an upper limit value of the above range or less, it is possible to obtain an appropriate foaming property and hardness. When the content is a lower limit value of the above range or more, it is possible to obtain a sufficient effect of the crosslinking agent.

In order to easily impart desired physical properties to the soft polyurethane foam obtained by foam molding the foaming stock solution, the isocyanate index is preferably 70 to 120, more preferably 80 to 110, and most preferably 85 to 105.

### <Polyisocyanate>

As the polyisocyanate contained in the foaming stock solution, diphenylmethane diisocyanate with an isocyanate index of 70 to 120 is preferable, of 80 to 110 is more preferable, and of 85 to 105 is most preferable.

Diphenylmethane diisocyanate (MDI) is a polyisocyanate component that is generally used in the field of polyurethane foams. As a specific type of MDI, 4,4-diphenylmethane diisocyanate (4,4-MDI), 2,4-diphenylmethanediisocyanate (2,4-MDI), and 2,2-diphenylmethane diisocyanate (2,2-MDI) which are generally referred to as monomeric MDI, polymeric MDI, crude MDI, and the like may be exemplified.

In the foaming stock solution, one type of MDI may be contained alone or two or more types of MDI may be contained.

The "isocyanate index" refers to a percentage of an amount actually added with respect to a stoichiometrically calculated required amount of polyisocyanate that reacts with all active hydrogen included in the polyol and the like in the foaming stock solution. For example, when the isocyanate index is 90, this means that 90% of the polyisocyanate by mass percentage is added with respect to a stoichiometrically required amount for reacting with all active hydrogen included in the polyol and the like in the foaming stock solution.

The isocyanate index derived from MDI contained in the foaming stock solution is preferably 70 to 120. When the isocyanate index is 70 or more, it is possible to easily stir the foaming stock solution. When the isocyanate index is 120 or less, it is possible to prevent collapse of the foam and it is possible to easily obtain a more favorable foam.

As an optional component, in addition to MDI in the above (iii), a small amount of a known polyisocyanate other than MDI may be added. For example, tolylene diisocyanate (TDI), triphenyl diisocyanate, xylene diisocyanate, polymethylene polyphenylene polyisocyanate, hexamethylene diisocyanate, and isophorone diisocyanate may be exemplified.

In order to easily impart desired physical properties to the soft polyurethane foam obtained by foam molding the foaming stock solution, a total content of the one or more types of diphenylmethane diisocyanate with respect to the total mass of polyisocyanate contained in the foaming stock solution is preferably 70 mass% or more, more preferably 80 mass% to 100 mass%, still more preferably 90 mass% to 100 mass%, and most preferably 95 mass% to 100 mass%.

### <Foaming agent>

As the foaming agent contained in the foaming stock solution, water is preferably used. Since water reacts with polyisocyanate and generates carbon dioxide gas, it functions as a foaming agent.

A content of water in the foaming stock solution is preferably 1 to 7 parts by mass and more preferably 2 to 5 parts by mass with respect to 100 parts by mass of polyol. Within the above range, it is possible to easily obtain a soft polyurethane foam having desired physical properties. In addition, it is possible to prevent thermal compression residual strain characteristics of the obtained soft polyurethane foam from deteriorating.

### <Catalyst>

As the catalyst contained in the foaming stock solution, a known catalyst used in the field of polyurethane foams may be used. Examples of known catalysts include an amine-based catalyst and a tin catalyst.

In general, known catalysts are roughly classified into gelling catalysts and blowing catalysts.

Gelling catalysts accelerate the reaction between a polyol and a polyisocyanate and accelerate formation of urethane bonds. A catalyst with a ratio of a blowing catalyst constant to a gelling catalyst constant (blowing catalyst constant/gelling catalyst constant) of 1 or less is called a gelling catalyst.

A blowing catalyst accelerates foaming rather than gelling. A catalyst with a ratio of a blowing catalyst constant to a gelling catalyst constant of greater than 1 is called a blowing catalyst.

Here, the gelling catalyst constant is a constant used for determining a rate of a gelling reaction between polyols and polyisocyanates, and as a value thereof increases, a crosslinking density of a foamed product increases. Specifically, a reaction constant of a gelation reaction between tolylene diisocyanate and diethylene glycol is used. On the other hand, the blowing catalyst constant is a constant used for determining a rate of a foaming reaction between polyisocyanates and water, and as a value thereof increases, communicability of cells of a foamed product is improved. Specifically, a reaction constant of a foaming reaction between tolylene diisocyanate and water is used.

The gelling catalyst constant and the blowing catalyst constant are determined by a known method.

Examples of the gelling catalyst include tertiary amines such as triethylenediamine (TEDA), a mixture of triethylenediamine and polypropylene glycol, N,N,N',N'-tetramethylethylenediamine, N,N,N',N'-tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, and 135-tris(N,N-dimethylaminopropyl)hexahydro-S-triazine; imidazoles such as 1-methylimidazole, 1,2-dimethylimidazole, and 1-isobutyl-2-methylimidazole; N,N,N',N'-tetramethylhexamethylenediamine, N-methyl-N'-(2-dimethylaminoethyl)piperazine, N,N'-dimethylpiperazine, N-methylpiperazine, N-methylmorpholine, and N-ethylmorpholine; and 1,8-diazabicyclo[5.4.0]undecene-7,1,1'-(3-(dimethylamino)propyl)imino)bis(2-propanol). As the gelling catalyst, a tertiary amine-based catalyst is preferable.

Examples of the blowing catalyst include bis(2-dimethylaminoethyl)ether, N,N,N',N",N"-pentamethyldiethylenetriamine, and N,N,N',N',N",N"'-hexamethyltriethylenetetramine. As the blowing catalyst, a tertiary amine-based catalyst is preferable.

In addition to the above amine-based catalyst, as the tin catalyst, known organotin catalysts, for example, stannous octoate, stannous laurate, dibutyltin dilaurate, dibutyltin dimaleate, dibutyltin diacetate, dioctyltin diacetate, and tin octylate, may be used.

In the foaming stock solution, as the catalyst, between a gelling catalyst and a blowing catalyst, at least a gelling catalyst is preferably contained.

A mass ratio of gelling catalyst:blowing catalyst contained in the foaming stock solution is preferably 100:0 to 100:100, more preferably 100:0 to 100:50, and most preferably 100:0 to 100:20.

A content of the amine-based catalyst in the foaming stock solution is preferably 0.1 to 5.0 parts by mass, more preferably 0.3 to 3.0 parts by mass, and most preferably 0.5 to 2.0 parts by mass with respect to 100 parts by mass of the polyol.

When the content is a lower limit value of the above range or more, it is possible to prevent collapse of the foam. When the content is an upper limit value of the above range or less, it is possible to obtain appropriate reactivity. As a result, it is possible to obtain a soft polyurethane foam having good mechanical properties.

A content of the tin catalyst in the foaming stock solution is preferably 0.001 to 1 parts by mass with respect to 100 parts by mass of the polyol.

### <Foam stabilizer>

A foam stabilizer may be contained in the foaming stock solution. As the foam stabilizer, a known foam stabilizer that is used in the field of polyurethane foams can be used. For example, a silicone-based foam stabilizer, an anionic foam stabilizer, and a cationic foam stabilizer may be used. Such foam stabilizers may include a foam stabilizer having a hydroxyl group at a molecular chain terminal.

A content of the foam stabilizer in the foaming stock solution is preferably 0.1 to 5 parts by mass, more preferably 0.5 to 3 parts by mass, and most preferably 0.7 to 2 parts by mass with respect to 100 parts by mass of the polyol. In general, the effect as the foam stabilizer can be sufficiently obtained at a content proportion of 5 parts by mass or less. In addition, when a content proportion is 0.1 parts by mass or more, a stirring property of the polyol and the polyisocyanate is improved, and it is possible to easily obtain a soft polyurethane foam having desired physical properties.

### <Other optional components>

Various additives can be added to the foaming stock solution as necessary. For example, a coloring agent such as a pigment, a chain extender, a filler such as calcium carbonate, a flame retardant, an antioxidant, a UV absorber, a light stabilizer, a conductive substance such as carbon black, and an antimicrobial agent can be added. Amounts of various additives added are appropriately adjusted according to applications and purposes.

### <Method of preparing foaming stock solution>

A method of preparing the foaming stock solution is not particularly limited. For example, a preparation method in which a mixture (hereinafter referred to as a "polyol mixture" in some cases) including the remaining materials except for the polyisocyanate is prepared and is then mixed with the polyisocyanate to obtain a foaming stock solution may be used.

When the polyol mixture is prepared, a known method may be used for mixing. Then, in a process of foam molding a soft polyurethane foam, the polyol mixture and polyisocyanate may be mixed.

A viscosity of the prepared polyol mixture at a liquid temperature of 25 □ is preferably 4,000 mPa·s or less and more preferably 3,000 mPa·s or less. Within such an appropriate viscosity range, stirring efficiency of the foaming stock solution becomes favorable, a sufficient amount of foam is uniformly obtained from the entire foaming stock solution, and it is possible to easily obtain a soft polyurethane foam (foam molded product) having desired physical properties.

A method of foam molding the soft polyurethane foam using the foaming stock solution is not particularly limited. For example, a known method in which a foaming stock solution is injected into a cavity formed in a mold and foam molding is performed can be used.

In the above known method, a liquid temperature of the foaming stock solution injected is preferably 10 to 50□. A temperature of the mold is preferably 40 to 80□. When the liquid temperature of the foaming stock solution and the temperature of the mold are within the above appropriate range, it is possible to easily obtain an appropriate foam. Together with the foam, a polyol component and a polyisocyanate component are polymerized to form a polyurethane, and the polyurethane is cured as the polymerization proceeds. Then, when the mold is released, a desired soft polyurethane foam is obtained. Here, a known reticulation treatment may be additionally performed on the obtained soft polyurethane foam.

Here, the "softness" of the soft polyurethane foam according to the present invention refers to hardness (stiffness) to such an extent that the soft polyurethane foam is deformed and recessed when the soft polyurethane foam is pressed by hand or a user sits thereon.

The soft polyurethane foam according to the present invention preferably has the following stiffness distribution. Here, the following stiffness distribution is that of the physical property in a direction (a direction orthogonal to the vertical direction from a surface layer in the depth direction) along the bearing surface when the soft polyurethane foam is used as a seat pad.

When the "elongation" of the soft polyurethane foam according to the present invention is measured by a method to be described below, the value (unit: %) is preferably more than 90 and more preferably 100 or more.

When the "tensile strength" of the soft polyurethane foam according to the present invention is measured by a method to be described below, the value (unit: kPa) is preferably more than 97 and more preferably 100 or more.

When the "tear strength" of the soft polyurethane foam according to the present invention is measured by a method to be described below, the value (unit: N/cm) is preferably more than 5.3 and more preferably 5.5 or more.

### <Stiffness distribution in thickness direction of soft polyurethane foam>

Regardless of a foam molding method, the soft polyurethane foam according to the present invention has a stiffness (hardness) that gradually increases in a thickness direction (that is, in an upward direction along a vertical line) from a lower layer to an upper layer during foam molding. That is, a stiffness distribution in the thickness direction of the soft polyurethane foam according to the present invention shows a continuously increasing trend or decreasing trend. Here, when viewed in a direction from the lower layer to the upper layer during foam molding of the soft polyurethane foam, the stiffness distribution shows an increasing trend. However, when viewed in a direction from the upper layer to the lower layer during foam molding of the same soft polyurethane foam, the stiffness distribution shows a decreasing trend.

While a mechanism by which the soft polyurethane foam according to the present invention exhibits the above stiffness distribution is not known in detail, combinations of components of the foaming stock solution are considered to be factors. In particular, inclusion of the polyether polyol B having 2 functional groups and a Mw of 1,000 to 4,000, inclusion of MDI as a large part of the polyisocyanate, and inclusion of a small amount or none of TDI are considered to be major factors. In addition, inclusion of the gelling catalyst as a catalyst component is also considered to greatly contribute to the above stiffness distribution being exhibited.

### [Examples]

The present invention will be described below in more detail with reference to examples. However, the present invention is not limited to the following examples.

### [Example 1 to 14 and Comparative Example 1]

According to formulations shown in Table 1, a mixture solution containing components other than polyisocyanate and polyisocyanate were mixed together to prepare a foaming stock solution. In the table, units of values of materials are parts by mass.

In Example 12, PPG-4 was used.

In Example 13, a mixture of EO and PO was used as a crosslinking agent, and there was more EO.

In Example 14, a crosslinking agent 3 (EO 100%) with a molecular weight of 600 was used.

When the foaming stock solution was injected into a mold and foam-molded, a seat pad was produced. The performance of the obtained seat pad was evaluated according to the following measurement methods. The results are shown in Table 1.

### [Table 1]

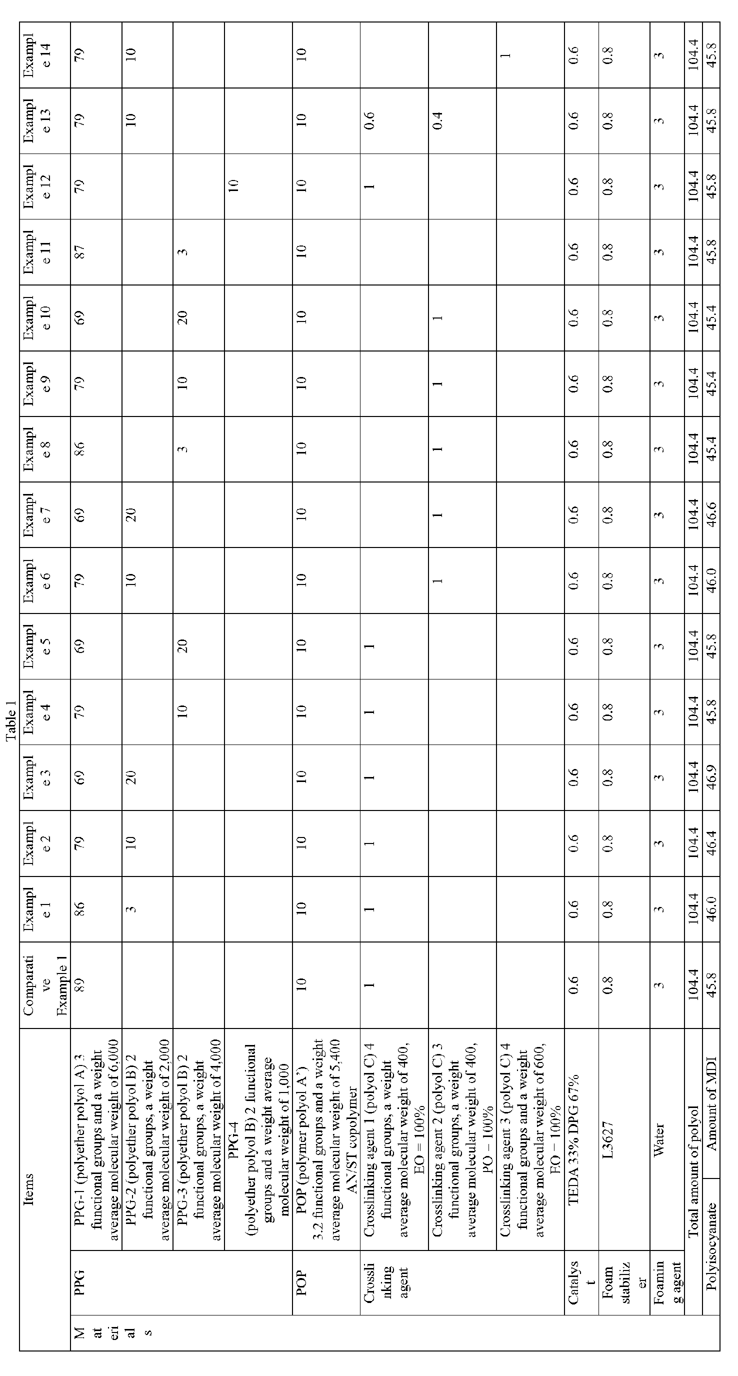

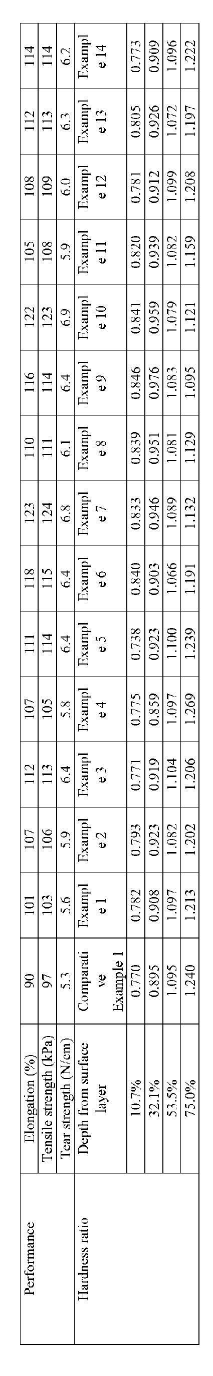

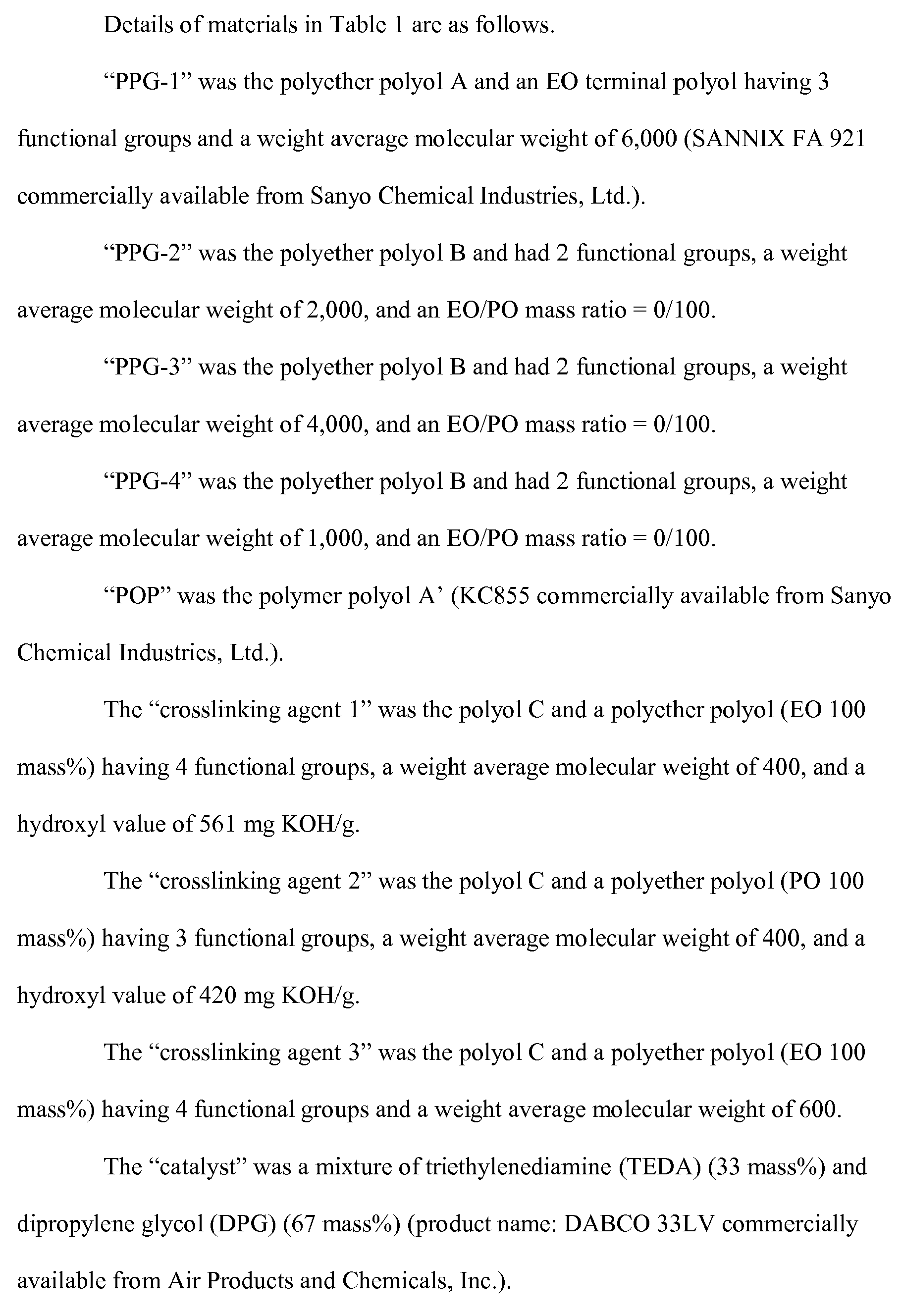

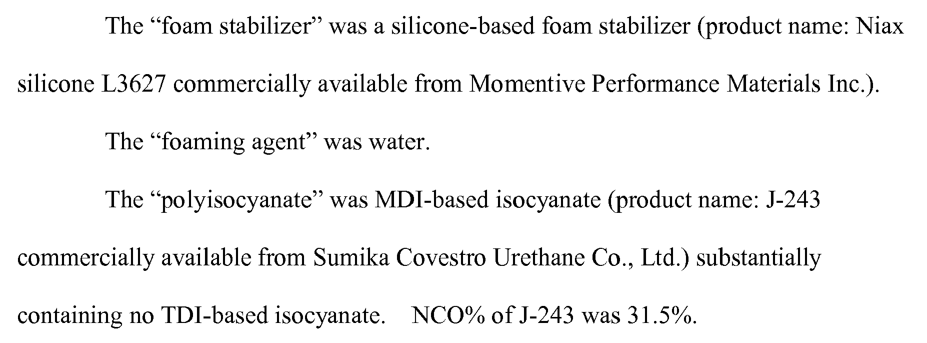

### <Methods of measuring mechanical properties>

The elongation, tensile strength, and tear strength were measured according to Japanese Industrial Standards JIS K 6400-5:2012. The physical property values measured here were physical property values in the horizontal direction (a direction orthogonal to the vertical direction from a surface layer in the depth direction) of the seat pad.

### <Performance evaluation>

In Examples 1 to 14 in which the polyether polyol B was contained, the elongation was 100% or more, the tensile strength was 100 kPa or more, and the tear strength was 5.5 N/cm or more. Based on such results, it can be clearly understood that the seat pads of Examples 1 to 14 had better mechanical properties than those of Comparative Example 1.

In addition, it was confirmed that the seat pads of Examples 6 to 10 in which the PO-based crosslinking agent was used had better mechanical properties than the seat pads of Examples 1 to 5 in which the EO-based crosslinking agent was used.

On the other hand, it was found that Examples 1 to 5 in which the EO-based crosslinking agent was used had good mechanical properties and had increased softness near the bearing surface as will be described below.

### <Measurement of hardness at depth positions>

By reversing an up and down orientation during foam molding of the soft polyurethane foam, the lower surface during foam molding is set as the front surface and the upper surface during foam molding is set as the rear surface. If the soft polyurethane foam is used as a seat pad, pleasant seating comfort is easily obtained when the front surface corresponding to the bearing surface of the seat pad is soft and the rear surface opposite to the bearing surface is hard.

Four evaluation samples (length 20 mm × width 20 mm× thickness 15 mm) were cut out from the front surface of a seat pad with a thickness of 70 mm in the thickness direction in four layers. The hardness (unit: N/mm2) at 25% compression was measured according to the method of Japanese Industrial Standards JIS K 6400-2.

### <Hardness ratio>

An average of the measured hardness measurement values in the four parts with different depth positions from the front surface was calculated and a ratio of the hardness of each part with respect to the average value was calculated. The hardness ratio refers to a ratio of a hardness of each part (each depth position) with respect to the average hardness in the thickness direction of the foam molded product. The results are shown in Table 1.

In all of the seat pads of Comparative Example 1 and Examples 1 to 14, the hardness ratio at a depth of 10.7% from the surface layer was 0.85 or less. This result shows that the front surface of the seat pad was soft and a feeling of seating was favorable. In addition, in all of the seat pads of Comparative Example 1 and Examples 1 to 14, the hardness ratio at a depth of 75.0% from the surface layer was 1.09 or more. This result shows that the rear surface of the seat pad was hard and operation stability (ease of movement when the seat slides or is tilted) was favorable.

As shown in the hardness ratios in Table 1, in the soft polyurethane foams of Comparative 1 and Examples 1 to 14, the hardness in the thickness direction from the front surface to the rear surface continuously increased. That is, the stiffness distribution in the thickness direction showed a continuously increasing trend. This increasing trend showed that a feeling of shakiness was slight. In addition, since the hardness ratio at a position near the front surface was relatively small, a resilience during seating was appropriate and a feeling of pressure from the bearing surface was slight.

Components, combinations, and the like in the embodiments described above are only examples, and additions, omissions, substitutions, and other modifications of the components can be made without departing from the scope of the present invention.

### [Industrial Applicability]

The soft polyurethane foam according to the present invention can be widely used for a seat pad for a vehicle. According to the present invention, it is possible to provide a seat pad having good mechanical properties and less feeling of shakiness during seating and a soft polyurethane foam for forming the seat pad.

## Claims

1. A soft polyurethane foam obtained by foam molding a foaming stock solution containing a polyol, a polyisocyanate, a foaming agent, and a catalyst,
wherein the polyol includes a polyether polyol A having a weight average molecular weight (Mw) of 3,000 to 8,000 and 3 to 4 functional groups and a polyether polyol B having a weight average molecular weight (Mw) of 1,000 to 4,000 and 2 functional groups, and
wherein the polyisocyanate includes diphenylmethane diisocyanate.

2. The soft polyurethane foam according to claim 1,
wherein the polyol includes a polyol C having a hydroxyl value of 200 mg KOH/g or more, having an alkyleneoxy group having 2 to 4 carbon atoms, and having a mass ratio between [ethyleneoxy groups]:[alkyleneoxy groups having 3 or 4 carbon atoms] of 100:0 to 60:40.

3. The soft polyurethane foam according to claim 1 or 2, wherein a stiffness distribution in a thickness direction of the soft polyurethane foam shows a continuously increasing trend or decreasing trend.

4. A seat pad comprising the soft polyurethane foam according to any one of claims 1 to 3.
